# EUROPEAN PATENT APPLICATION

(11) **EP 4 787 123 A1**
(43) Date of publication of application: **05.08.2026**
(21) Application number: 24870631.9
(22) Date of filing: 20.09.2024
(51) Int. Cl.: G06F 3/01

(54) **FOOT STEPPING RECOGNITION METHOD AND APPARATUS, AND DEVICE AND STORAGE MEDIUM**

(30) Priority: 26.09.2023 CN 202311253633
(71) Applicant: Beijing Zitiao Network Technology Co., Ltd., Beijing 100190 (CN)
(72) Inventor: DAI, Peng, Beijing 100028 (CN); ZHANG, Yang, Beijing 100028 (CN); LIU, Tao, Beijing 100028 (CN); DU, Tianyuan, Beijing 100028 (CN)
(74) Representative: Grünecker Patent- und Rechtsanwälte PartG mbB
(86) International application number: PCT/CN2024/120218
(87) International publication number: WO 2025/067087

(57) **Abstract**

Embodiments of the application provide a method, an apparatus, a device of foot stepping recognition and a storage medium. The method includes: determining a stepping state of at least two target parts of a user's foot based on stepping motion data of the user's foot, wherein the target parts are contactable parts of the foot with ground when the foot lands; determining, based on a change in the stepping state of each target part, a stepping event of the target part. The embodiments of the application can achieve accurate recognition of the stepping events of at least two target parts of the foot, support accurate recognition of various stepping actions executed by different target parts of the foot, and ensure the diversity of foot stepping recognition.

## Description

This application claims priority to Chinese Patent Application No. 202311253633.9, filed on Sep. 26, 2023, entitled "METHOD, APPARATUS AND DEVICE OF FOOT STEPPING RECOGNITION AND STORAGE MEDIUM", which is incorporated herein by reference in its entirety.

### FIELD

Embodiments of the present application relate to the technical field of data processing, and in particular, to a method, apparatus, device of foot stepping recognition, and a storage medium.

### BACKGROUND

In various virtual reality scenarios supported by Extended Reality (XR) technology, corresponding information interaction can typically be achieved through the user's foot stepping actions. For example, in a virtual reality scenario, the user can experience dance machines, music stepping games, and other similar activities through foot stepping actions.

Currently, existing methods for foot stepping recognition usually analyze the various stepping actions performed by the entire foot as a whole to determine the stepping state. This approach introduces certain limitations in foot stepping recognition.

### SUMMARY

Embodiments of the present application provide a method, apparatus and device of foot stepping recognition , and a storage medium. The method realizes accurate recognition of stepping events of at least two target parts of a foot, and ensures diversity of stepping recognition of the foot.

In a first aspect, an embodiment of the present application provides a method of foot stepping recognition. The method comprises:
determining a stepping state of at least two target parts of a user's foot based on stepping motion data of the user's foot, wherein the target parts are contactable parts of the foot with ground when the foot lands;
determining, based on a change in the stepping state of each target part, a stepping event of the target part.

In a second aspect, an embodiment of the present application provides an apparatus of foot stepping recognition. The apparatus comprises:
a stepping state determination module configured to determine a stepping state of at least two target parts of a user's foot based on stepping motion data of the user's foot, wherein the target parts are contactable parts of the foot with ground when the foot lands;
a foot stepping determination module configured to determine, based on a change in the stepping state of each target part, a stepping event of the target part.

In a third aspect, an embodiment of the present application provides an electronic device. The electronic device comprises:
a processor and a memory, the memory being configured to store a computer program. The processor is configured to invoke and run the computer program stored in the memory, so as to execute the method of foot stepping recognition provided in the first aspect of the present application.

In a fourth aspect, an embodiment of the present application provides a computer readable storage medium, configured to store a computer program, where the computer program enables a computer to execute the method of foot stepping recognition provided in the first aspect of the present application.

In a fifth aspect, an embodiment of the present application provides a computer program product, comprising a computer program/instruction, wherein the computer program/instruction enables a computer to execute the method of foot stepping recognition provided in the first aspect of the present application.

### BRIEF DESCRIPTION OF THE DRAWINGS

To describe the technical solutions in embodiments of the present application more clearly, the following briefly introduces the accompanying drawings required for describing embodiments. Apparently, the accompanying drawings in the following description show merely some embodiments of the present application, and a person of ordinary skill in the art may still derive other drawings from these accompanying drawings without creative efforts.
FIG. 1 is a flowchart of a method of foot stepping recognition according to an embodiment of the present application;
FIG. 2 is an example schematic diagram of a target part of a foot provided by an embodiment of the present application;
FIG. 3 is an example schematic diagram of a stepping event of a target part according to an embodiment of the present application;
FIG. 4 is a schematic principle diagram of a process of determining an overall stepping event of a foot according to an embodiment of the present application;
FIG. 5 is a schematic structural diagram of a stepping recognition system according to an embodiment of the present application;
FIGS. 6a, 6b, 6c and 6d are example model structure diagrams in four different structures of the stepping recognition model provided by the embodiment of the present application, respectively;
FIG. 7 is a schematic structural diagram of a training data collection system for a stepping recognition model according to an embodiment of the present application;
FIG. 8 is a principle block diagram of an apparatus of foot stepping recognition according to an embodiment of the present application;
FIG. 9 is a schematic block diagram of an electronic device according to an embodiment of the present application.

### DETAILED DESCRIPTION

The following clearly and completely describes the technical solutions in embodiments of the present application with reference to the accompanying drawings in embodiments of the present application. Apparently, the described embodiments are merely a part rather than all of embodiments of the present application. All other embodiments obtained by a person of ordinary skill in the art based on embodiments of the present application without creative efforts shall belong to the protection scope of the present application.

It should be noted that the terms "first" and "second" in the specification, claims, and accompanying drawings of the present application are used to distinguish similar objects, and are not necessarily used to describe a specific sequence or order. It should be understood that the data so used may be interchanged where appropriate so that embodiments of the present application described herein can be implemented in sequences other than those illustrated or described herein. Furthermore, the terms "include" and "have" and any variations thereof, are intended to cover a non-exclusive inclusion, for example, a process, method, system, product or server that includes a series of steps or units is not necessarily limited to those expressly listed, but may include other steps or units not expressly listed or inherent to such process, method, product or device.

In embodiments of the present application, words such as "example" or "for example" are used for example, illustration or description, and any embodiment or solution described as "example" or "for example" in embodiments of the present application should not be construed as preferable or advantageous over other embodiments or solutions. Rather, use of words such as "example" or "for example" is intended to present related concepts in a concrete manner.

Before introducing the specific technical solutions of the present application, the application scenarios of the present application are first described correspondingly:
The implementation solution of the present application can be applied to any scenario that can support a user's foot to trigger corresponding information interaction by performing various stepping actions. The application scenario may include triggering information interaction supported by a related device in a real environment by a stepping action executed by a user's foot in the real environment where the user is currently located, such as a dance machine in the real environment. The application scenario may further include that a user enters the virtual reality environment through an XR device, and triggers corresponding information interaction within the virtual reality environment through a stepping action executed by the user's foot, such as a dance machine or a music-type stepping game in the virtual reality environment. The present application does not limit a specific application scenario, and can support a user's foot to trigger corresponding information interaction by performing various stepping actions.

Taking a virtual reality environment as an example, an application scenario of the present application may be exemplarily described:
In a virtual reality environment, a user may perform various stepping actions by foot, so as to trigger corresponding information interaction, for example, a dance machine or a music-type stepping game in the virtual reality environment. To realize foot stepping interaction within a virtual reality environment, in the present application, at any electronic device in communication with a display and one or more input devices, a corresponding virtual reality environment may be displayed by means of the display of the electronic device. The electronic device may be any extended reality (XR) device, and may specifically include a virtual reality (Virtual Reality, VR for short) device, an augmented reality (Augmented Reality, AR for short) device, a mixed reality (Mixed Reality, MR for short) device, and the like, which is not limited in the present application.

The display may be any display screen that establishes a communication connection with the electronic device. For example, the display may be a display screen configured for a head mounted display device on a VR device, an AR device, or an MR device, which is not limited in the present application.

Moreover, to achieve normal interaction for users in the virtual reality environment, the present application can initiate corresponding interaction operations with the virtual reality environment displayed on the screen through one or more input devices that communicate with the electronic device, thereby supporting various interactions performed by users in the virtual reality environment.

The one or more input devices may be any control and information collection devices that are communicatively connected to the electronic device. For example, the one or more input devices may include handles configured on VR, AR, or MR equipment, collection modules for detecting hand operations and eye movement information, or voice collectors for collecting user voice information. This application does not limit the type of input device.

In the present application, to accurately recognize the various foot stepping actions performed by the user, one or more input devices can be collection modules for detecting the stepping motion data of the user's foot during various stepping actions.

Currently, to solve the problem of certain limitations in foot stepping recognition when directly analyzing the overall stepping action of the entire foot through a binary classification model to identify the stepping state of the foot, the inventive concept of this application is as follows: based on the contactable parts of the user's foot with ground when landing, at least two target parts may be distinguished on the user's foot, and the stepping state of each target part can be determined. Based on the changes in the stepping state of each target part, the stepping event of that target part can be determined. Then, by comprehensively referring to the stepping events of at least two target parts of the foot, the overall stepping event of the foot can be determined, thereby achieving accurate recognition of foot stepping events. By comprehensively referring to the stepping events of multiple target parts of the foot, accurate recognition of various stepping actions performed by different target parts of the foot is supported, and the comprehensiveness of foot stepping recognition is ensured.

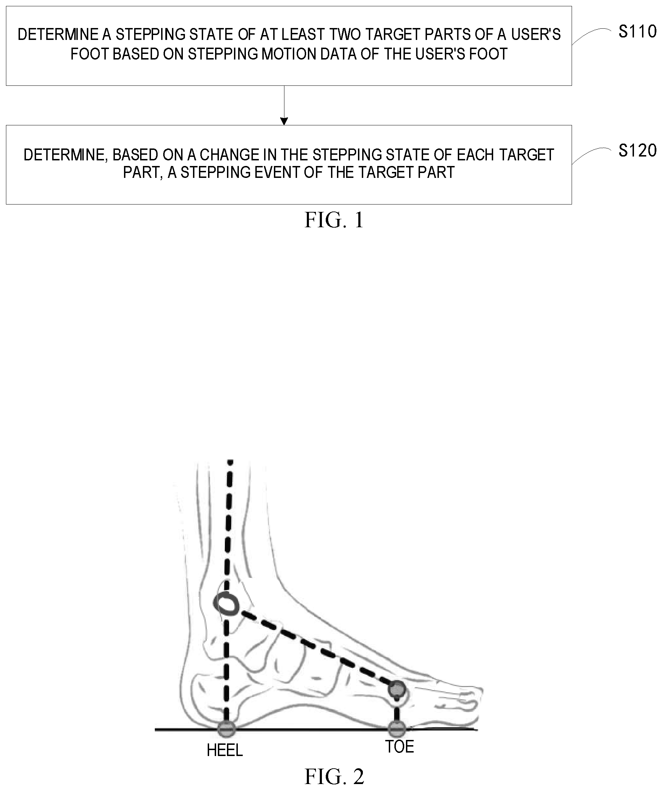

FIG. 1 is a flowchart illustrating a method of foot stepping recognition provided by an embodiment of the present application. This method can be applied to XR devices but is not limited to such applications. The method can be executed by the apparatus of foot stepping recognition provided in the present application, which can be implemented by any combination of software and/or hardware. For instance, the apparatus of foot stepping recognition can be configured in an electronic device capable of simulating virtual reality scenarios, such as an AR/VR/MR device. This application does not impose any specific limitations on the type of electronic device.

Through the technical solution of the present application, for at least two target parts in the contactable parts of the user's foot with the ground during landing, a stepping state of each target part can be determined. Then, based on the changes in the stepping state of each target part, the stepping event of that target part is determined. This approach allows for the accurate recognition of stepping events for at least two target parts of the foot, supporting the accurate recognition of various stepping actions performed by different target parts of the foot and ensuring the diversity of foot stepping recognition.

Specifically, as shown in FIG. 1, the method may include the following steps:
S110, determining a stepping state of at least two target parts of a user's foot based on stepping motion data of the user's foot.

In a virtual reality environment, a corresponding stepping action may generally be executed by a user's foot, so as to implement corresponding information interaction. Then, in order to ensure the accurate interaction of the user within the virtual reality environment, it is generally necessary to accurately judge whether the user's foot is stepped on the ground within the virtual reality environment, and as a stepping recognition task of the user's foot, various interactions within the virtual reality environment are achieved.

Considering that a user's foot is not a simple point but includes a variety of different parts, for a foot stepping recognition task, the user's foot may step on the ground through a plurality of different parts capable of contacting the ground, so as to execute a corresponding stepping motion. However, when a part of the foot that can contact the ground during foot landing, there is no need to consider the state of other parts of the foot relative to the ground. This illustrates that the stepping actions performed by the user's foot are diverse.

As an example, the stepping action performed by the user's foot may include the following: stepping on the ground with the toe when the heel is on the ground, stepping on the ground with the heel when the toe is on the ground, stepping on the ground with the toe when the heel is suspended, stepping on the ground with the heel when the toe is suspended, and stepping up and down vertically with both the toe and heel when the foot is parallel to the ground.

Hence, to ensure the comprehensiveness of foot stepping recognition, the present application can determine at least two target parts of a foot by analyzing contactable parts between a user's foot and the ground, so as to support performing various stepping actions by using the target parts of the foot. The contact parts between the user's foot and the ground may include, but is not limited to, a toe, a heel, toes, forefoot, and side foot.

For example, to support convenient execution of a foot stepping action of a user, as shown in FIG. 2, a target part in the present application may be a toe and a heel of a foot.

It can be understood that the user's foot may be single foot or double feet, which is not limited in the present application. Thus, for both single foot and double feet, each single foot may include at least two target parts.

Thus, when the user's foot performs a corresponding stepping action, the present application may use a corresponding data collection device to acquire each piece of stepping motion data of the foot in real time. The stepping motion data may include, but is not limited to, at least one of information such as a movement position, a direction posture, an acceleration, and an angular velocity of the user's foot when performing various stepping actions.

Then, with regard to each target part of a user's foot, by performing a corresponding motion analysis on each piece of stepping motion data of the foot, it can be determined whether each target part is in contact with the ground or has moved away from the ground, so as to determine the stepping state of each target part.

It can be seen therefrom that the stepping state of each target part may comprise two states: a landing state and a lifting state. The criterion for distinguishing between the landing state and the lifting state may generally be the height of the target part of the foot from the ground. If a height of a target part from the ground is less than a preset threshold (for example, 5 cm), it indicates that the target part is approximately in contact with the ground, and then it can be determined that the target part is in a stepping state. If the height of a target part from the ground is greater than or equal to a preset threshold value (for example, 5 cm), it indicates that the target part is approximately far away from the ground, and then it can be determined that the target part is in a lifting state.

S120: determining, based on a change in the stepping state of each target part, a stepping event of the target part.

Since the stepping actions executed by the user's foot mainly involve continuous movements of landing on and lifting from the ground, i.e., continuous changes in the stepping state of the user's foot, this application uses stepping events to represent the changes in the stepping state of the foot to accurately recognize each stepping action executed by the user's foot.

Hence, after the stepping state of at least two target parts of the user's foot are determined, in the present application, with respect to each target part, the stepping event represented by the target part every time the stepping state changes can be determined by analyzing the change of the stepping state of the target part. Thus, in the same manner as described above, the stepping event for each target part can be determined.

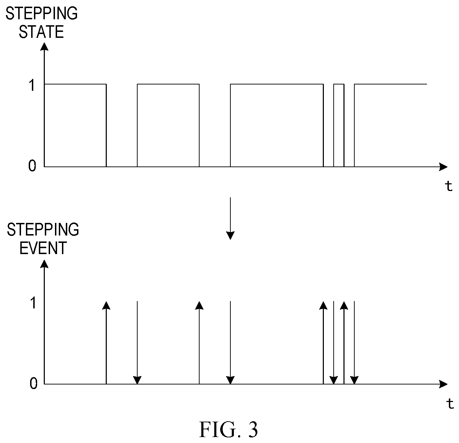

As an optional implementation solution in the present application, since the stepping state of each target part of the user's foot may include a landing state and a lifting state, as shown in FIG. 3, for each target part of the foot, the stepping event of the target part may be divided into the following two cases:
Case one: If the target part transitions from the landing state to the lifting state, a lifting event for the target part is generated.

That is to say, during the process of a user executing a corresponding stepping action through a target part of a foot, if the target part is changed from a landing state to a lifting state, as shown in FIG. 3, from a landing state represented by a state "1" to a lifting state represented by a state "0", it means that the target part moves away from the ground at the current transition moment, and thus a lifting event of the target part is generated.

Case two, if the target part transitions from the lifting state to the landing state, a landing event of the target part is generated.

That is to say, during the process of a user executing a corresponding stepping actions through a target part of a foot, if the target part is changed from a lifting state to a landing state, as shown in FIG. 3, from a lifting state represented by a state "0" to a landing state represented by a state "1", it means that the target part is in contact with the ground at the current transition moment, and thus a landing event of the target part is generated.

According to the described contents, after determining a landing event of at least two target parts of a user's foot, the present application can take a landing event of any one or more target parts in various target parts as a trigger condition for a certain interactive operation in a virtual reality environment. Then, after the landing event of one or more target parts is detected, a corresponding interaction operation can be executed in the virtual reality environment.

According to the technical solution provided in embodiments of the present application, with regard to at least two target parts in the contactable parts between the user's foot and the ground, the landing state of each target part can be determined. Then, based on a change in the stepping state of each target part, the stepping event of the target part is determined, thereby implementing accurate recognition of the stepping events of at least two target parts of the foot, supporting accurate recognition of various stepping actions performed by the foot through different target parts, and ensuring diversity of stepping recognition.

In the present application, to ensure full recognition of foot stepping, after determining stepping events of at least two target parts of a foot, the present application may further determine an overall stepping event of the foot based on the stepping events of the at least two target parts of the foot.

That is, after the stepping event of each target part of the foot is determined, the stepping event of each target part of the foot may represent one stepping event generated by one stepping action of the foot. Hence, to ensure a comprehensive recognition of a foot stepping event of a user, in the present application, comprehensive analysis may be performed on the stepping events of at least two target parts of a foot to derive a complete stepping event, which is used as an overall stepping event of the foot in the present application.

In some implementations, to avoid repeated redundancy of an overall foot stepping event, the present application may determine the overall foot stepping event by using the following steps: combining the stepping events of each target portion of a foot to derive a combination of stepping events of the foot; filtering the combination of stepping events based on a preset stepping logic of a foot to derive an overall stepping event of the foot.

After the stepping event of each target part is determined, according to the present application, the stepping events of the target parts may be combined according to the execution time sequence of the stepping events of the target parts, so as to derive the combination of foot stepping events.

However, in different foot stepping application scenarios, different recognition requirements exist for foot stepping tasks. Thus, in the present application, according to different foot stepping recognition requirements in different foot stepping application scenarios, an appropriate foot stepping logic may be preset in each foot stepping application scenario as the preset foot stepping logic in the present application.

Hence, for a combination of foot stepping events, in the present application, a preset stepping logic suitable in a current foot stepping application scenario may be used to filter partial stepping events that do not conform to the preset stepping logic among the combinations of foot stepping events, and delete the filtered partial stepping events from the combinations of stepping events, so as to obtain an overall foot stepping event.

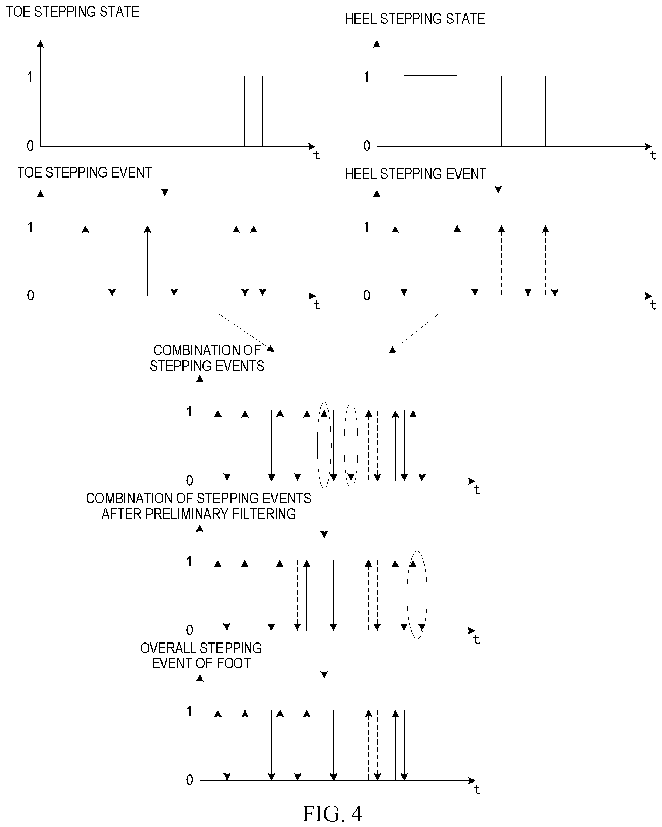

Taking the fact that at least two target parts of a foot are a toe and a heel as an example, as shown in FIG. 4, in the present application, a toe stepping state and a heel stepping state can be determined respectively, so as to determine a toe stepping event and a heel stepping event. The up arrow in FIG. 4 may represent a lifting event, and the down arrow may represent a landing event.

Then, according to the sequence of the execution time of each toe stepping event and each heel stepping event, in the present application, various toe stepping events and various heel stepping events may be combined together to obtain a combination of foot stepping events.

It is assumed that the preset stepping logic of the foot is that "a landing event and a lifting event of a foot occur alternately in sequence" and "a time interval between adjacent stepping events is not less than a preset interval threshold (for example, 1s)". Then, according to the preset stepping logic in which the landing event and the lifting event of a foot appear alternately in sequence, in the combination of the stepping events of the foot, for the same stepping event appearing continuously (such as a landing event or a lifting event), in the present application, only the stepping event appearing for the first time can be reserved, and the subsequent repeated stepping events appearing continuously can be deleted. For example, in FIG. 4, a landing event and a lifting event are marked in the combination of stepping events, so as to derive a preliminarily filtered combination of stepping events.

Then, in the preliminary filtered combination of stepping events, according to the preset stepping logic that "a time interval between adjacent stepping events is not less than a preset threshold interval (for example, 1s)", the present application may continue to delete partial stepping events whose interval time with the previous stepping event is less than the preset interval threshold. For example, in FIG. 4, a landing event and a lifting event are marked in the preliminary filtered combination of the stepping events. As a result, an overall stepping event of the foot is derived.

According to the described contents, after an overall stepping event of a user's foot is determined, the present application can take the overall landing event of the foot as a trigger condition for a certain interactive operation in a virtual reality environment. Then, after the overall foot stepping event is detected, a corresponding interaction operation can be executed in the virtual reality environment.

The technical solution provided in embodiments of the present application determines an overall stepping event of a foot by means of comprehensive analysis of stepping events of at least two target parts of the foot, thereby implementing accurate recognition of the stepping event. By comprehensively referring to stepping events of a plurality of target parts of a foot, accurate recognition of various stepping actions performed by the foot by means of different target parts is supported, thereby ensuring the comprehensiveness of stepping recognition.

As an optional implementation solution in the present application, to ensure accurate recognition of a stepping state of each target part of a user's foot, a stepping recognition model can be pre-trained in the present application, and the stepping recognition model can be used for accurately predicting a stepping state of each target part of a foot.

Then, with regard to the stepping state of each target part of the foot, in the present application, the stepping motion data of the user's foot can be input into a pre-built stepping recognition model, and the stepping states of at least two target parts of the foot are output.

In the present application, when a user's foot performs various stepping actions, a corresponding data collection device can be used to acquire various pieces of stepping motion data of the foot in real time. The stepping motion data may include, but is not limited to, at least one of information such as a movement position, a direction posture, an acceleration, and an angular velocity of the user's foot when performing various stepping motions.

In some implementations, a stepping recognition system may be pre-built in the present application, so as to obtain the stepping motion data of the foot by using the stepping recognition system.

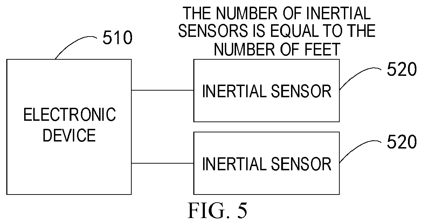

As shown in FIG. 5, the stepping recognition system in the present application may comprise an electronic device 510 and at least one inertial sensor 520 communicatively connected to the electronic device 510.

The electronic device 510 may be an XR device, and specifically includes an AR device, a VR device, an MR device, and the like, so as to present a corresponding virtual reality environment to a user.

Specifically, the number of the inertial sensors 520 may be equal to the number of the user's foot, and each inertial sensor 520 may be worn in an associated part of the user's foot. Since the foot's various stepping actions can primarily manifest as movements centered on the foot's sole, they can also drive the corresponding lower leg to perform the same movements. Therefore, the associated part of the foot can be the center of the sole or the corresponding lower leg.

Then, each inertial sensor 520 may collect, in real time, inertial data when a foot to be worn performs a specified stepping action. The inertial data may include, but is not limited to, posture data and angular velocity information of a relevant direction when the foot performs various stepping actions. Then, the stepping motion data on the user's foot may include inertia data collected by each of the inertial sensors 520 worn on the correlated parts of the respective foot. Furthermore, the stepping motion data is transmitted to the electronic device 510 so that the electronic device 510 can acquire the stepping motion data for each of the legs. Then, the electronic device 510 can determine the stepping state of at least two target parts of the foot based on the stepping motion data of the foot.

With regard to the number of inertial sensors, assuming that the present application mainly focuses on a single-foot stepping event in left and right feet, an inertial sensor may be configured, and the inertial sensor is worn on an associated part of the single foot focused on this time, so as to collect inertial data of the single foot when performing various stepping actions, and use the inertial data as stepping motion data of the single foot.

Assuming that the present application mainly focuses on a two-foot stepping event consisting of left and right feet, two inertial sensors may be configured, and the two inertial sensors are worn on associated parts of the left and right feet respectively, so that inertial data of the left and right feet in performing various stepping actions are collected by the two inertial sensors as stepping motion data of the left and right feet.

It should be noted that, in addition to wearing the inertial sensor 520, the associated part of the user's foot may also wear an electronic component with a certain computing capability, so as to independently analyze the stepping events of a plurality of target parts of the user's foot and/or the overall stepping events of the foot. It can be seen therefrom that the electronic device 510 and the inertial sensor 520 in the present application may not have a one-to-many relationship, but may have a one-to-one relationship.

Furthermore, with regard to the stepping recognition model in the present application, the stepping recognition model may comprise a backbone network and a plurality of head networks, the total number of the head networks is equal to the total number of each target part of the foot, and the target part corresponding to each head network are different from other target parts.

On the other hand, the present application may also set at least two stepping recognition models, each stepping recognition model can comprise a backbone network and at least one head network with the same structure, and the total number of head networks in each stepping recognition model is equal to the total number of target parts of a foot, and target part corresponding to each head network are different from other target parts.

In the above two stepping recognition models, the backbone network may comprise a plurality of basic blocks with the same structure. The backbone network is configured to predict a temporal fusion feature of stepping motion data of a user's foot, and respectively input the temporal fusion feature into each head network connected to the backbone network, Therefore, the temporal fusion feature of the stepping motion data of the user's foot can be obtained by each head network in each of the stepping recognition models. Each head network may be configured to predict the stepping state of one target part of the foot based on the temporal integration feature.

That is to say, by setting the total number of head networks in each of the stepping recognition models to be equal to the total number of target parts of the foot, all the head networks in each of the stepping recognition models can be in one-to-one correspondence with each target part of the foot, so that one head network can be used for predicting a stepping state of one of the target parts. Then, the stepping state of each target portion of the foot can be predicted by all the head networks in the respective stepping recognition models.

Furthermore, each basic block in a backbone network (a backbone network) in each stepping recognition model may include fully connected layers (FCs), a normalized layer (Layer Normalization, LayerNorm), and a recurrent neural network (RNN) that are connected in sequence. The head network in each of the stepping recognition models may be a Multilayer Perceptron (MLP).

In the present application, feet are a pair of left and right feet, and a target part of the foot is a toe and a heel. In the present application, four items of information, i.e., a stepping state of a left toe, a stepping state of a left heel, a stepping state of a right toe and a stepping state of a right heel, need to be output finally by using a stepping recognition model. Hence, the total number of head networks in each stepping recognition model may be 4.

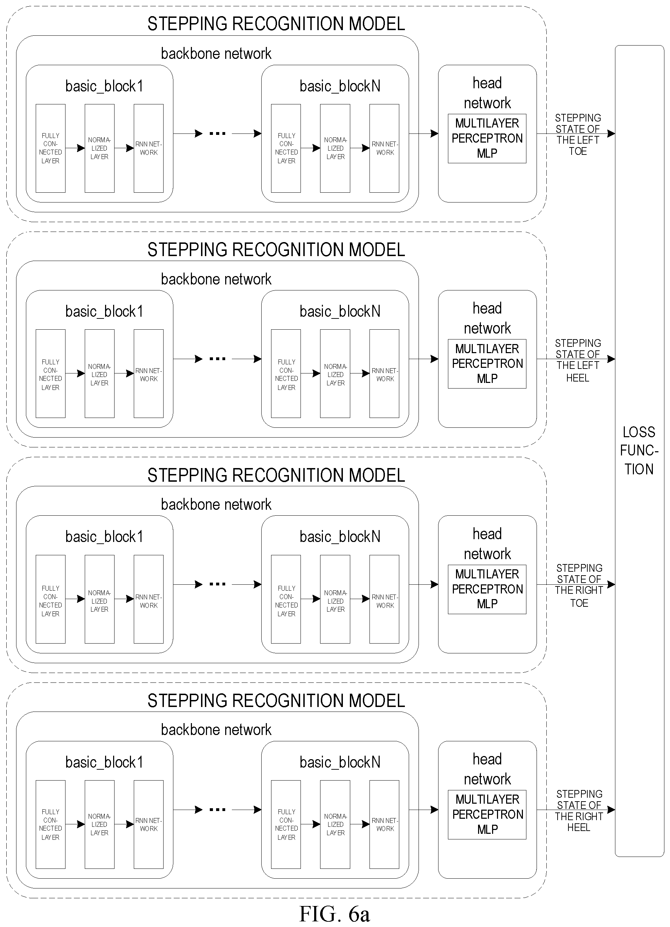

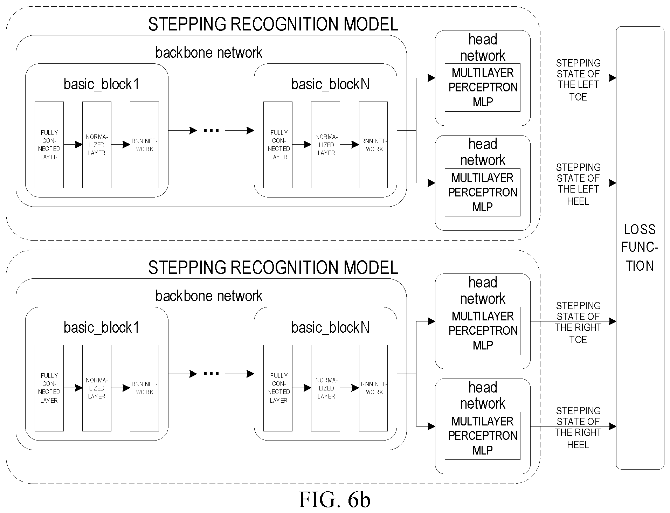

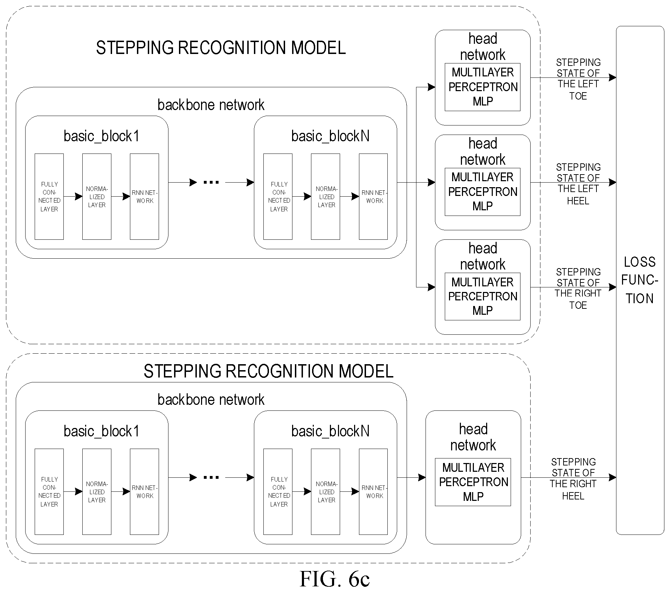

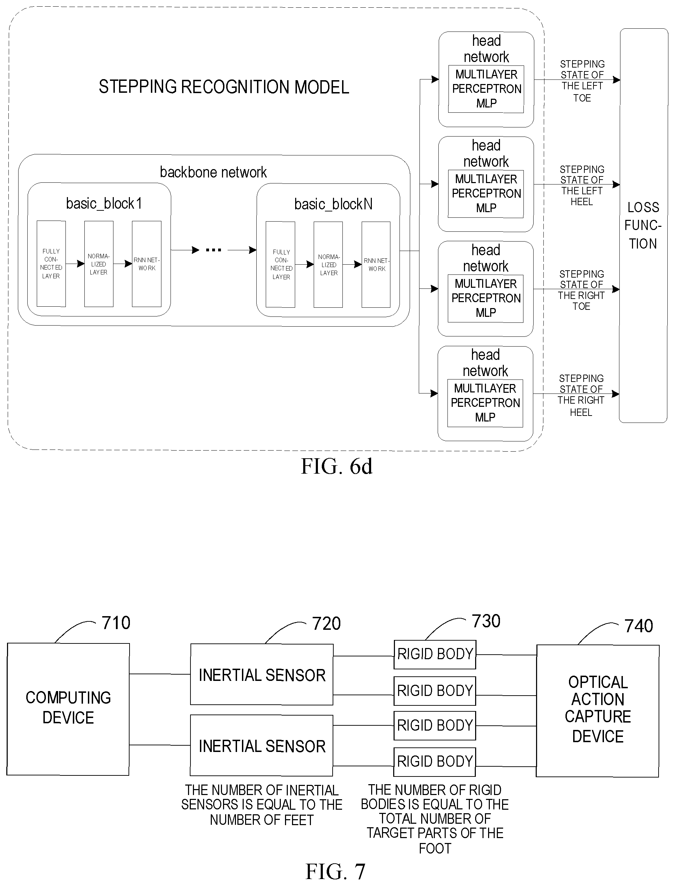

Thus, the setting is different based on the number of the stepping recognition models, and the number of head networks in various stepping recognition models built in the present application may be different. FIG. 6a, FIG. 6b, FIG. 6c and FIG. 6d may be structural diagrams of four different example models of the stepping recognition model according to the present application.

In the present application, after the stepping motion data of the user's foot is acquired, the stepping motion data may be directly input into the built stepping recognition model. Then, corresponding feature fusion processing is successively performed on the stepping motion data of the foot through a plurality of basic blocks with the same structure in a backbone network in the stepping recognition model, so as to derive a corresponding temporal fusion feature. Then, by continuing to perform corresponding feature mapping processing on the temporal fusion feature through each head network in the stepping recognition model, the stepping state of each target part of the foot is determined.

However, when there are at least two stepping recognition models, in the present application, the stepping motion data of the user's foot can be respectively input into at least two pre-built stepping recognition models, and the stepping states of at least two target parts of the foot are output. Thus, for the stepping motion data input in each of the stepping recognition models, corresponding feature fusion processing can be sequentially performed on the stepping motion data of the foot through a plurality of basic blocks with the same structure in a backbone network in each of the stepping recognition models, so as to drive corresponding temporal fusion features. Then, corresponding feature mapping processing is continued on the temporal fusion feature through each head network in each stepping recognition model to determine a stepping state of each target part of the foot.

In some implementable manners, to ensure the recognition accuracy of the stepping state of each target part of the foot, the method for outputting the stepping state of each target part of the foot by using a stepping recognition model in the present application may specifically be: preprocessing stepping motion data of a user's foot to derive a stepping feature vector of the foot; inputting the stepping feature vector into a pre-built stepping recognition model, and outputting the stepping state of at least two target parts of the foot.

That is to say, after the stepping motion data of the user's foot is acquired, since the stepping motion data has a plurality of structures, it is inconvenient to efficiently process the stepping recognition model. Hence, in the present application, the stepping motion data of the user's foot can be pre-processed and converted into a one-dimensional feature vector as the feature vector of the foot stepping in the present application.

For example, when a user's foot performs various stepping actions, the present application can collect stepping motion data of the user's foot in real time, which indicates that the stepping motion data of the user's foot is a group of time-series data, and can be expressed as: *X =* {*x*₁, *x*₂, ··· *, x_{T}*}, representing that T frames of inertia data collected by various inertial sensors worn on the foot are contained. The stepping motion data *xₜ* of each frame may include, but is not limited to, a rotation matrix corresponding to directional posture information collected by each inertial sensor worn by the user's foot, and angular velocity information.

Then, with regard to the stepping motion data *xₜ* of each frame, in the present application, a rotation matrix corresponding to directional posture information collected by each inertial sensor can be converted into a corresponding one-dimensional vector. Furthermore, by multiplying the inverse of the rotation matrix in the stepping motion data *x*_{*t*-1} of the preceding frame by the rotation matrix *xₜ* in the stepping motion data of the preceding frame, corresponding angular velocity information can be derived and converted into another one-dimensional vector. Then, the above two one-dimensional vectors and the angular velocity information collected by the inertial sensors are combined together to drive the stepping feature vectors *fₜ* corresponding to the stepping motion data *xₜ* of the frame.

After determining the stepping feature vector of the foot, the present application may input the stepping feature vector into a pre-built stepping recognition model. Then, corresponding feature processing is performed on the stepping feature vector by using the backbone network and each head network in the stepping recognition model, so that the stepping state of each target part of the foot can be predicted.

In one or more embodiments of the present application, to ensure that the stepping recognition model accurately recognizes the stepping state of each target part of the foot, the present application needs to specify a large number of various stepping actions performed by user's foot in advance, so as to acquire a large amount of training data. Then, a corresponding loss function may be provided in the stepping recognition model to calculate a loss between the predicted value of the stepping state of each target part of the user's foot after a large amount of training data is input thereto and the actual value of the stepping state represented by the sample tag, thereby continuously updating the stepping recognition model until the loss of the stepping recognition model converges.

The loss function in the stepping recognition model may be a binary cross entropy loss (Binary Cross Entropy Loss, BCE loss for short).

With regard to training data for a stepping recognition model, in the present application, a training data collection system can be built in advance, so as to acquire corresponding training data by means of the training data collection system.

As shown in FIG. 7, the training data collection system may include a computer device 710, at least one inertial sensor 720 communicatively coupled to the computer device 710, at least two rigid bodies of different shapes 730, and an optical action capture device 740.

Specifically, the number of the inertial sensors 720 is equal to the number of the user's foot, and each inertial sensor 720 may be worn at an associated part of the user's foot. Each of inertial sensors 720 may then be used to collect inertial data for a foot performing a designated stepping action and transmit the inertial data to computer device 710 as a corresponding training sample.

The number of rigid bodies 730 is equal to the total number of target parts of the user's foot, and each rigid body 730 is fixed at each target position of the user's foot in one-to-one correspondence. By using rigid bodies of different shapes to respectively intuitively represent different target parts, it is convenient for the optical action capture device 740 to take images of the rigid body of different shapes from each target part. In this way, the actual stepping state specifically performed by each target part is distinguished easily.

The optical action capture device 740 may include a surround camera array, so as to capture, omnidirectionally from various angles, images of the rigid bodies of different shapes worn by various target parts when a user's foot performs various stepping actions, thereby conveniently distinguishing a actual stepping state of each target part. Then, the optical action capture device 740 may acquire images of the rigid body of each target part of the foot when the foot performs a specified stepping action by using a surround camera array, so as to determine a true value of the stepping state of the target part, and transmit the true value of the stepping state of each target part as a corresponding sample tag to the computer device 710.

It can be understood that, in the training data collection system, the computer device 710 and the electronic device 510 in the stepping recognition system may be the same device, and may also be different devices, for example, a head-mounted display device, which is not limited in the present application.

Thus, at the training data collection stage, based on the stepping events of different foot parts that the stepping recognition model terminal focuses on, a large number of users can be required to fix rigid bodies 730 of different shapes on target parts of the foot parts focused on, respectively, and wear corresponding inertial sensors 720 at associated parts of the foot parts focused on.

Then, when the user's foot performs various specified stepping actions, the inertial sensors 720 worn at relevant positions of the user's foot may collect inertia data of the worn foot performing the specified stepping actions in real time. The inertia data may include, but is not limited to, directional posture data and angular velocity information related to the foot performing various stepping actions. Then, in the present application, inertial data collected by each inertial sensor 720 may be used as historical stepping motion data of a corresponding foot where the inertial sensor 720 is worn, and may be used as a corresponding training sample. In turn, the training samples are transmitted to computer device 710 along with a timestamp represented by the collection time of the training samples.

Furthermore, at the same time point, the optical action capture device 740 may perform, by using a surround camera array, when a designated stepping motion is performed on a corresponding foot where each inertial sensor 720 is worn, photographing rigid bodies of different shapes that are fixed for each target part of the foot, so as to derive images of rigid-bodies corresponding to each target part. Then, the optical action capture device 740 determines the height of the rigid body in the rigid-body image from the ground by performing corresponding feature positioning on the image of the rigid-body of each target region, so as to determine whether each target part is in contact with the ground, thereby deriving a true value of stepping state of each target part. Furthermore, the true value of stepping state for each target part may be transmitted to the computer device 710 as a corresponding sample tag, along with a timestamp represented by the shooting time of the rigid-body image.

Then, the computer device 710 can obtain a large number of training samples and sample tags, and combine the training sample and sample tag at the same time stamp to derive corresponding training data, so as to accurately train the stepping recognition model in the present application.

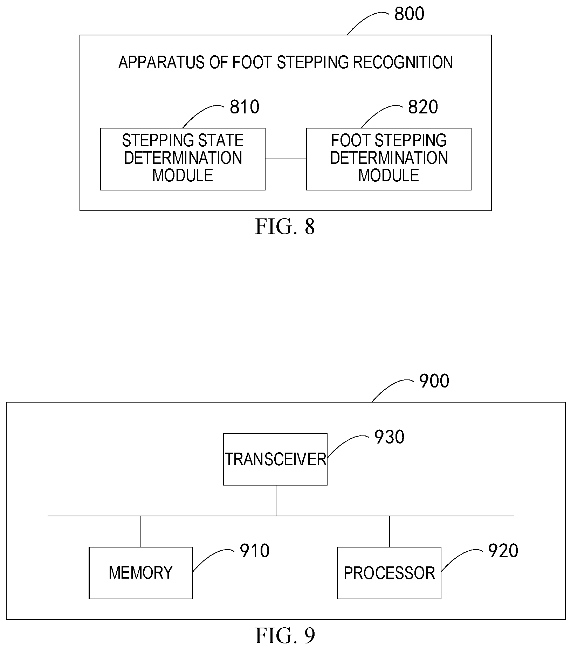

FIG. 8 is a principle block diagram of an apparatus of foot stepping recognition according to an embodiment of the present application. As shown in FIG. 8, the apparatus of foot stepping recognition 800 may include:
a stepping state determination module 810 configured to determine a stepping state of at least two target parts of a user's foot based on stepping motion data of the user's foot, wherein the target parts are contactable parts of the foot with ground when the foot lands;
a foot stepping determination module 820 configured to determine, based on a change in the stepping state of each target part, a stepping event of the target part.

In some implementations, the stepping state determination module 810 may be specifically configured to:
input the stepping motion data of the user's foot into a pre-built stepping recognition model to output the stepping state of at least two target parts of the foot.

In some implementations, the stepping state determination module 810 may be specifically configured to:
preprocess the stepping motion data of the user's foot to derive a stepping feature vector of the foot;
input the stepping feature vector into the pre-built stepping recognition model to output the stepping state of at least two target parts of the foot.

In some implementations, the stepping recognition model includes a backbone network and a plurality of head networks, a total number of the head networks is equal to a total number of the target parts of the foot, and the target part corresponding to each of the head networks is different from other target parts.

In some implementations, there are at least two stepping recognition models, each of the stepping recognition models comprises a backbone network and at least one head network of a same structure, a total number of the head networks in each of the stepping recognition models is equal to a total number of the target parts of the foot, and the target part corresponding to each of the head networks is different from other target parts.

Accordingly, the stepping state determination module 810 may be specifically configured to:
inputting the stepping motion data of the user's foot into at least two pre-built stepping recognition models, respectively, to output the stepping state of the at least two target parts of the foot.

In some implementations, training data of the stepping recognition model is acquired by a pre-built training data collection system; the training data collection system comprises a computer device, at least one inertial sensor communicatively connected to the computer device, at least two rigid bodies of different shapes and an optical action capture device; wherein,
the number of the inertial sensor is equal to the number of the foot, and the inertial sensor is worn on an associated part of the foot, and is configured to collect inertial data of the foot when performing a specified stepping action, and transmit the inertial data to the computer device as a corresponding training sample;
the number of the rigid bodies is equal to a total number of the target parts of the foot, and each rigid body is fixed at each target part of the foot in one-to-one correspondence;
the optical action capture device comprises a surround camera array for acquiring an image of the rigid body of each target part of the foot when the foot performs the specified stepping action so as to determine a true value of the stepping state of the target part, and transmitting the true value of the stepping state of each target part as a corresponding sample tag to the computer device;
the training sample and sample tag is combined, by the computer device, at a same time stamp to derive corresponding training data.

In some implementations, the stepping motion data of the foot is acquired by a pre-built stepping recognition system; the stepping recognition system comprises an electronic device and at least one inertial sensor communicatively connected to the electronic device; wherein,
the number of the inertial sensor is equal to the number of the foot, the inertial sensor is worn on an associated part of the foot, and is configured to collect inertial data of the foot when performing a specified stepping action, and transmit the inertial data as the stepping motion data of the foot to the electronic device;
the electronic device is configured to determine the stepping state of at least two target parts of the foot based on the stepping motion data of the foot.

In some implementations, the stepping state comprises a landing state and a lifting state. The foot stepping determination module 820 may be specifically configured to:
for each target part of the foot, if the target part transitions from the landing state to the lifting state, generating a lifting event for the target part;
if the target part transitions from the lifting state to the landing state, generating a landing event of the target part.

In some implementations, the apparatus of foot stepping recognition 800 can further include:
an overall foot stepping recognition module configured to determine an overall stepping event of the foot based on stepping events of at least two target parts of the foot.

In some implementations, the overall foot stepping recognition module may be specifically configured to:
combine the stepping events of each target part of the foot to derive a combination of stepping events of the foot;
filter the combination of stepping events according to a preset stepping logic of the foot to derive an overall stepping event of the foot.

In embodiments of the present application, for at least two target parts in the contactable parts of the user's foot between the user's foot and the ground when the user's foot lands on the ground, the stepping state of each target part may be determined. Then, based on a change in the stepping state of each target part, the stepping event of the target part is determined, thereby implementing accurate recognition of the stepping events of at least two target parts of the foot, supporting accurate recognition of various stepping actions performed by the foot through different target parts, and ensuring diversity of stepping recognition.

It should be understood that device embodiments and method embodiments in the present application may correspond to each other, and for similar description, reference may be made to method embodiments in the present application. To avoid repetition, no further description will be given here.

Specifically, the apparatus 800 shown in FIG. 8 may execute any method embodiments provided in the present application, and the foregoing and other operations and/or functions of the modules in the apparatus 800 shown in FIG. 8 are intended to implement corresponding processes of the method embodiments, which are not described herein again for brevity.

In the foregoing, the foregoing method embodiments of embodiments of the present application are described from the perspective of functional modules with reference to the accompanying drawings. It should be understood that, the function module may be implemented in a form of hardware, may also be implemented by an instruction in a form of software, and may also be implemented by a combination of hardware and software modules. Specifically, each step of the method embodiments in embodiments of the present application may be completed by means of an integrated logic circuit of hardware in a processor and/or an instruction in the form of software. Steps in combination with the methods disclosed in embodiments of the present application may be directly embodied as being completed by a hardware decoding processor, or may be completed by using a combination of hardware and software modules in a decoding processor. Optionally, the software module may be located in a mature storage medium in the field, such as a random access memory, a flash memory, a read-only memory, a programmable read-only memory, an electrically erasable programmable memory, and a register. The storage medium is located in a memory, and the processor reads information in the memory and completes the steps in the described method embodiments in combination with hardware thereof.

FIG. 9 is a schematic block diagram of an electronic device according to an embodiment of the present application.

As shown in FIG. 9, the electronic device 900 may include:
a memory 910 and a processor 920, where the memory 910 is configured to store a computer program, and transmit the program code to the processor 920. In other words, the processor 920 may invoke and run a computer program from the memory 910, so as to implement the method in embodiments of the present application.

For example, the processor 920 may be configured to execute the foregoing method embodiments according to instructions in the computer program.

In some embodiments of the present application, the processor 920 may include, but is not limited to:
a general purpose processor, a digital signal processor (DSP), an application specific integrated circuit (ASIC), a field programmable gate array (FPGA) or another programmable logic device, a discrete gate or transistor logic device, a discrete hardware component, or the like.

In some embodiments of the present application, the memory 910 includes, but is not limited to:
a volatile memory and/or a non-volatile memory, wherein the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically Erasable EPROM, EEPROM), or a flash memory. Volatile memory may be random access memory (RAM), which serves as an external cache, by way of example and not limitation, Many forms of RAM are available, such as static random access memory (SRAM), dynamic random access memory (Dynamic RAM), a DRAM, a synchronous dynamic random access memory (Synchronous DRAM, SDRAM), and a double data rate synchronous dynamic random access memory (Double Data Rate SDRAM), DDR SDRAM), Enhanced Synchronous Dynamic Random Access Memory (Enhanced SDRAM, ESDRAM), Synchronous Link DRAM, SLDRAM) and Direct Memory Bus Random Access Memory (DDR RAM).

In some embodiments of the present application, the computer program may be divided into one or more modules, and the one or more modules are stored in the memory 910 and executed by the processor 920 to complete the methods provided in the present application. The one or more modules may be a series of computer program instruction segments capable of performing a particular function, the instruction segments describing the execution of the computer program in the electronic device 900.

As shown in FIG. 9, the electronic device can further include:
a transceiver 930 connectable to the processor 920 or memory 910.

The processor 920 can control the transceiver 930 to communicate with other devices, and specifically, can send information or data to other devices, or receive information or data sent by other devices. The transceiver 930 may further include an antenna, and the number of the antenna may be one or more.

It should be understood that, components in the electronic device 900 are connected through a bus system, where the bus system further includes a power bus, a control bus, and a state signal bus in addition to a data bus.

The present application also provides a computer storage medium, on which a computer program is stored. The computer program, when executed by a computer, enables the computer to execute the method of the described method embodiment.

Embodiments of the present application further provide a computer program product comprising a computer program/instruction. The computer program/instruction, when executed by a computer, enables the computer to execute the method of the described method embodiments.

When implemented using software, it may be implemented in whole or in part in the form of a computer program product comprising one or more computer instructions. When the computer program instructions are loaded and executed on the computer, the processes or functions according to embodiments of the present application are totally or partially generated. The computer may be a general purpose computer, a special purpose computer, a computer network, or other programmable apparatus. The computer instructions may be stored on or transmitted from one computer-readable storage medium to another, For example, the computer instructions may be transmitted from a website, computer, server, or data center by wire (e.g., coax, fiber optics, digital subscriber line), DSL) or wireless (e.g., infrared, wireless, microwave, etc.,) transmission to another website, computer, server, or data center. The computer readable storage medium may be any available medium that can be accessed by a computer, or a data storage device such as a server, a data center, or the like that includes one or more available media arrays. The useable medium may be a magnetic medium (e.g., floppy disk, hard disk, magnetic tape), an optical medium (e.g., digital video disc (DVD)), a semiconductor medium (e.g., solid state disk (SSD)), or the like.

The foregoing descriptions are merely specific implementations of the present application, but are not intended to limit the scope of protection of the present application. Any variation or replacement readily figured out by a person skilled in the art within the technical scope disclosed in the present application shall belong to the scope of protection of the present application. Therefore, the scope of the present application should be subject to the scope of this claim.

## Claims

1. A method of foot stepping recognition comprising:
determining a stepping state of at least two target parts of a user's foot based on stepping motion data of the user's foot, wherein the target parts are contactable parts of the foot with ground when the foot lands;
determining, based on a change in the stepping state of each target part, a stepping event of the target part.

2. The method of claim 1, wherein the determining a stepping state of at least two target parts of a user's foot based on stepping motion data of the user's foot comprises:
inputting the stepping motion data of the user's foot into a pre-built stepping recognition model to output the stepping state of at least two target parts of the foot.

3. The method of claim 2, wherein the inputting the stepping motion data of the user's foot into a pre-built stepping recognition model to output the stepping state of at least two target parts of the foot comprises:
preprocessing the stepping motion data of the user's foot to derive a stepping feature vector of the foot;
inputting the stepping feature vector into the pre-built stepping recognition model to output the stepping state of at least two target parts of the foot.

4. The method of claim 2, wherein the stepping recognition model comprises a backbone network and a plurality of head networks, a total number of the head networks is equal to a total number of the target parts of the foot, and the target part corresponding to each of the head networks is different from other target parts.

5. The method of claim 2, wherein there are at least two stepping recognition models, each of the stepping recognition models comprises a backbone network and at least one head network of a same structure, a total number of the head networks in each of the stepping recognition models is equal to a total number of the target parts of the foot, and the target part corresponding to each of the head networks is different from other target parts;
accordingly, the inputting the stepping motion data of the user's foot into a pre-built stepping recognition model to output the stepping state of at least two target parts of the foot comprises:
inputting the stepping motion data of the user's foot into at least two pre-built stepping recognition models, respectively, to output the stepping state of the at least two target parts of the foot.

6. The method of claim 2, wherein training data of the stepping recognition model is acquired by a pre-built training data collection system; the training data collection system comprises a computer device, at least one inertial sensor communicatively connected to the computer device, at least two rigid bodies of different shapes and an optical action capture device; wherein,
the number of the inertial sensor is equal to the number of the foot, and the inertial sensor is worn on an associated part of the foot, and is configured to collect inertial data of the foot when performing a specified stepping action, and transmit the inertial data to the computer device as a corresponding training sample;
the number of the rigid bodies is equal to a total number of the target parts of the foot, and each rigid body is fixed at each target part of the foot in one-to-one correspondence;
the optical action capture device comprises a surround camera array for acquiring an image of the rigid body of each target part of the foot when the foot performs the specified stepping action so as to determine a true value of the stepping state of the target part, and transmitting the true value of the stepping state of each target part as a corresponding sample tag to the computer device;
combining, by the computer device, the training sample and sample tag at a same time stamp to derive corresponding training data.

7. The method of claim 2, wherein the stepping motion data of the foot is acquired by a pre-built stepping recognition system; the stepping recognition system comprises an electronic device and at least one inertial sensor communicatively connected to the electronic device; wherein,
wherein the number of the inertial sensor is equal to the number of the foot, the inertial sensor is worn on an associated part of the foot, and is configured to collect inertial data of the foot when performing a specified stepping action, and transmit the inertial data as the stepping motion data of the foot to the electronic device;
the electronic device is configured to determine the stepping state of at least two target parts of the foot based on the stepping motion data of the foot.

8. The method of claim 1, wherein the stepping state comprises a landing state and a lifting state, and the determining, based on a change in the stepping state of each target part, a stepping event of the target part comprises:
for each target part of the foot, if the target part transitions from the landing state to the lifting state, generating a lifting event for the target part;
if the target part transitions from the lifting state to the landing state, generating a landing event of the target part.

9. The method of claim 1, wherein the method further comprises:
determining an overall stepping event of the foot based on stepping events of at least two target parts of the foot.

10. The method of claim 9, wherein the determining an overall stepping event of the foot based on stepping events of at least two target parts of the foot comprises:
combining the stepping events of each target part of the foot to derive a combination of stepping events of the foot;
filtering the combination of stepping events according to a preset stepping logic of the foot to derive the overall stepping event of the foot.

11. An apparatus of foot stepping recognition comprising:
a stepping state determination module configured to determine a stepping state of at least two target parts of a user's foot based on stepping motion data of the user's foot, wherein the target parts are contactable parts of the foot with ground when the foot lands; and
a foot stepping determination module configured to determine, based on a change in the stepping state of each target part, a stepping event of the target part.

12. An electronic device comprising:
a processor;
a memory, configured to store an executable instruction of the processor;
wherein the processor is configured to execute the method of foot stepping recognition of any of claims 1-10 by executing the executable instruction.

13. A computer readable storage medium, on which a computer program is stored, wherein the computer program implements the method of foot stepping recognition of any of claims 1 to 10 when being executed by a processor.

14. A computer program product comprising a computer program/instruction, when the computer program/instruction contained in the computer program product is run on an electronic device, the electronic device is enabled to execute the method of foot stepping recognition of any of claims 1-10.
